# EUROPEAN PATENT SPECIFICATION

(11) **EP 2 093 406 B1**
(45) Date of publication and mention of the grant of the patent: **12.01.2011**
(21) Application number: 09386002.1
(22) Date of filing: 22.01.2009
(51) Int. Cl.: F02F 3/00, F16J 1/12

(54) **A piston assembly which can be rapidly assembled/disassembled by a hydraulic key installed within the rod**
Kolben, der schnell mit einem hydraulischen Schlüssel, der in der Stange eingebaut ist, montiert/demontiert werden kann
Piston pouvant être rapidement montée/démontée par une clé hydraulique installée dans la tige

(30) Priority: 25.01.2008 GR 20080100051
(43) Date of publication of application: 26.08.2009
(73) Proprietor: Mastrokalos, Konstantinos, 84003 Sifnos (GR)
(72) Inventor: Mastrokalos, Konstantinos, 84003 Sifnos (GR)

(56) References cited:
- GB-A- 344 725
- GB-A- 780 529
- GB-A- 840 145
- US-A- 1 521 388

## Description

The invention relates to the way and details for the quick assembling/disassembling of piston heads of large internal combustion engines. These engines belong to the closed crankcase type and are used in electricity plants and particularly as propulsion engines for ships. These pistons are dividable, for easy maintenance and operation.

The present invention refers to large-sized, dividable pistons of the head and the skirt, wherein the rod has a flange, in which there are receptors for screws, usually four, according to the way applied in modem constructions, to the quick and easy assembling/disassembling, by using a hydraulic key permanently installed in the rod. The invention constitutes a new arrangement of a previous patent, for old-type pistons, the rod of which was tied to the cross head by only one nut.

The method employed until now is the use of multiple screws and nuts arranged on a circular base and on multiple levels, which when tightened hold the individual parts in a position of full assembly of the unit, as known from the manuals of all the large internal combustion engines.

Such a piston is shown by GB840 145.

Aim of the invention is, first, the prevention or minimization of risks for injuries of the personnel. Especially for sea engines, and under bad weather conditions, and under intense rocking, since the head constitutes only a part of the piston, it has a lower weight and volume, and particularly a very small length, which is important, since no dismantling of the rod is necessary. Also, any damages on the various mechanical parts are prevented, and especially of the stuffing boxes, i.e. the scrapers for oil and mud products, which accumulate in the scanning air areas, which are parts of high financial and operational value, since it is not necessary to be dismantled, as it happens every time in case of conventional constructions and under specific conditions, which require large time for the disassembling-assembling thereof. Also, the external reciprocating surfaces of the rod are protected, which are always exposed to damages, which are parts very expensive and difficult to obtain, due to the weight and volume. Also the inspection work is reduced, by avoiding the unnecessary work (either because the maintenance hours are not completed, or because no wear is present), but simply are executed for accession to non-easily accessible, or non-accessible areas. The required time is reduced to a minimum, since these operations are executed under normal conditions, or under emergency conditions. Thus in case of emergency or necessary work, the time is shortened providing at the same time personnel safety and convenience for optical check on other parts or areas.

The present invention presents two new ways for achieving the above purpose. The first one uses a hydraulic key, which constitutes a permanent part of the lower part of rod, holding the parts constituting the piston by tension, while reversibly the second one by compression. A common part in both cases, for the retaining and tightening the individual parts constituting the piston unit, that is the head and the skirt, is achieved by using a central elongate hollow connecting bar, which serves as a pipe providing the cooling medium, which locks or unlocks, by extractors, of the horse shoe-shaped locks of the final position of the head and skirt. In the variation, and for both cases, the central elongate hollow bar has a larger cross-section, for tolerances against breakage forces, especially tension, and reinforced with cross-shaped transverse ribs, for resistance and avoidance of bending during compression, and also the angles of the contact wedges have been significantly reduced, for both cases and thus the central elongate hollow bars after maintenance work, during the operation phase of the engine-piston, almost behave as monitors. In the first case, the central elongate hollow bar carries via the frustoconical and wedge-shaped surfaces, the motion to the horse shoe locks, which were until now in rest position, decentralizing these by guides, on the skirt, in their final tightening position, within a peripheral groove and which at the same time entrain the extractors to a rest position, for extraction (during the next supervision). A reverse motion of the extractors and the horse shoe locks for loosening, or disassembling of the piston, is achieved by the compression of the central elongate hollow bar, again via the hydraulic key. The upwards shifting of the central elongate hollow bar will first extract the extractors, from their rest position, which by their guides arranged on the head of the piston, will push the horse shoe locks to the area created by the frustoconical wedge-shaped surfaces of the central elongate hollow bar during ascending, thus releasing the peripheral groove in which it was up till now, and leaving the head free from their presence. Additionally, and for eliminating any problem that might arise during execution of the work, during further ascending of the central elongate hollow bar, the upper terminal surface thereof will touch the specially reinforced or treated surface of the head of the piston, thus the head is finally detached or removed from the skirt. In the second case, the reverse is performed, while in the first case the ascending course of the hydraulic piston and the compressive tension, disassembled the head, the same motion now tightens and holds in operation condition, the parts constituting the piston unit, as it will be revealed below.

Further characteristics of the invention and the advantages obtained from that are given by means of the accompanying figure.
Figure 1 shows a side view of all parts of the first case of the present invention.
Figure 2 shows a partial cross-section of the parts of the upper part of the piston, and the paths followed by the extractors with the horse shoe locks, activated by the central elongate hollow bar.
Figure 3 shows the cross-section of the head of the piston, in combination with the figures presented in the same page for better understanding.
Figure 4 shows in plan view a horse shoe lock, an extractor and a pin retaining the extractor in tightened position.
Figure 5 shows in plan view the horse shoe locks, the extractors, their pins in tightening position as well as the upper part of the central elongate bar.
Figure 6 shows the upper part of the central elongate bar, a safety extractor in disassembling or hanging position, its pin, and the upper, specially treated surface of the central elongate bar which operates as an extractor or final detacher of the piston head.
Figure 7 depicts the same as in figure 6 in a 90° angle.
Figure 8 depicts a grab of two parts, which is used for grasping the central elongate hollow screw and removal from its position, where needed.
Figure 9 shows in plan view the details of the hydraulic piston, with openings for the cooling medium through its body.
Figure 10 depicts the ribs or cross-shaped maintenance points, which may be used by such a construction for reinforcing the central elongate bar, for retaining its linear configuration, the number of which varies depending on the size of the unit.
Figure 11 depicts in plan view, the sole of the rod, with the positions and the presence of eccentric locks-tracers thereof, and the holes present in the body of the tongue-locks, which at the upper front have a rounded face for preventing the vortexing and for facilitating the passage of the cooling liquid. Also the dove tail ending is shown on the face connecting the two tongue-locks.
Figure 12 shows a cross-section of all the parts constituting the second case of the present invention.
Figure 13 and 14 show in partial cross-section, the section of head-skirt of the piston, with an illustrative explanation of the vectors covered by the cooperating parts in order to be connected or released.

Below, a detailed explanation of the operation of the invention is given based on the accompanying figure:

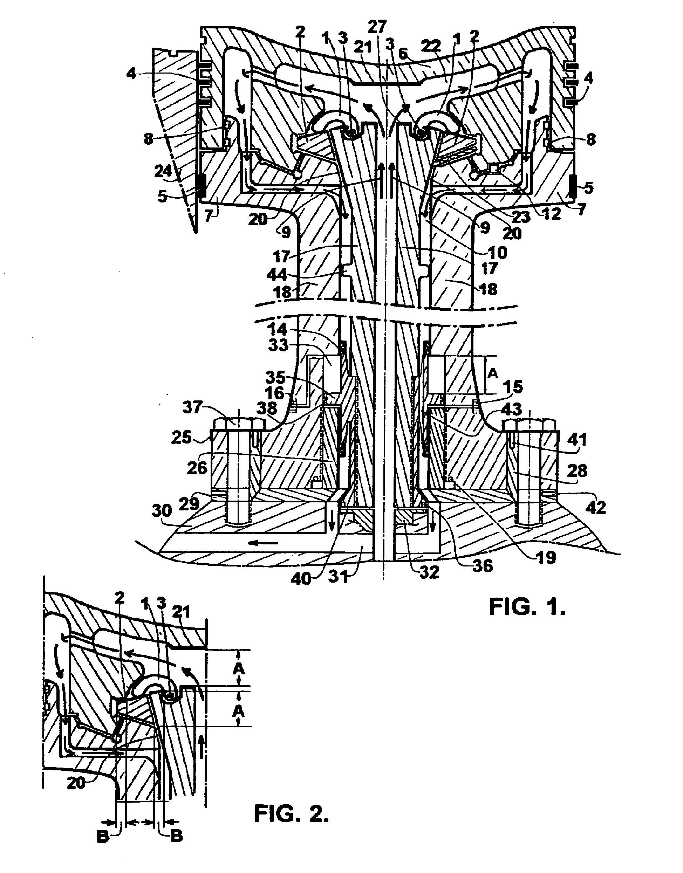

Figure 1 shows in longitudinal cross-section of the piston in the cylinder of the engine, of closed crankcase, wherein the basic part and tool for executing the work of quick assembling/disassembling of the piston head (6), without removing all the piston from its cylinder, is a central elongate hollow bar (17) of special configuration and strength, which at the lower part has a special configuration for proper application in its socket, has at its center a passage (9) for the cooling liquid of the piston head (6) and skirt. The pin of the cross or cross head (30) is shown, i.e. the mechanism for receiving the lateral counter pushes produced by the transformation of the reciprocating motion of the piston to rotational by the connecting rod, and the pin of the rod (30). The connecting rod first receives the produced energy from the combustion area and then by the piston head (6), the skirt (7) and the rod (18) transfers it to the crank shaft for the final work output. The upper end of the central elongate hollow bar (17) has an outer frustoconical shape (20). When the central, elongate hollow bar (17) during the disassembling is forced to move upwards, due to the hydraulic pressure created at the lower part of the hydraulic piston (35), it pushes the extractors (1) to the periphery, the extractors (1) are retained on the central, elongate hollow bar (17) with their pins (3). Then, the extractors (1) by sliding on the treated, and correspondingly shaped surface of the head of the piston (6) force the horse shoe locks (2), with which there are in contact and which are locked in a peripheral groove configured in the inner area of the head (6), at the terminal tightening position of the head (6) with the skirt (7), to move and gather to the area revealed after lifting of the frustoconical area of the central elongate hollow bar (20) by a distance (A). Thus, the groove of the head (6) is now released from the presence of the horse show locks (2), and then during ascending of the central hollow bar (17), and having covered the distance (A), the upper end thereof (27) will touch the opposite reinforced area of the head (21) forcing the final detachment, preventing any obstacle that might arise and the head is now ready to by pulled from its position. Reversely, during assembling, the central elongate hollow bar (17) is pulled downwards due to the opposite exerted hydraulic pressure, to the upper part of the hydraulic piston (35), then its upper frustoconical area (20) forces, also due to the wedge form of the surfaces, the horse shoe locks (2) to be removed from the area in which they had gathered, to the periphery and to lock or tighten these in terminal positions in the peripheral groove of the head (6), thus tightening the head (6) with the skirt (7). The horse shoe locks (2) also step on the configured seat of the piston skirt (7), where there are incisions or guides-wedge-shaped paths for the keys (23) of each horse shoe lock (2), in order to avoid deviation or lateral sliding thereof, in the various phases of operations. During the upper motion, the extractors (1) are forced to accumulate in a wait area for the next disassembling. The assembly head-skirt (6,7) has for the proper alignment, retention and prevention of angular shift during the operation of the engine, a socket for positioning the key (12). The skirt of the piston (7) may be a single piece with the rod (18) or two different parts connected between them by screws. The skirt of the piston (7) has two peripheral grooves in which synthetic sealing rings (8) are positioned to seal the circulating cooling liquid between the cooling areas (22) of the head (6) and the skirt (7). The head (6) is equipped with a series of compression springs (4) which serve to seal and prevent a pressure loss by the escape of fume gases from the combustion area above these to the remaining area of the cylinder.

Also, the skirt of the piston (7) carries a ring guide (5) made of a material softer than the jacket (24), to preserve the alignment of the piston on its jacket. Between the central elongate hollow bar (17) and the main rod (18), a cylindrical area (10) is formed, through which the cooling liquid of the space (22) between the head-skirt (6, 7) is returned, which had been introduced by a special fitting in the pin of the cross head (32) and protected against leakages with the insert (40) and by the central elongate hollow bar (9, 17), and which finally comes out from the piston via the provided passage in the area of the body of the cross (31), to finally direct it to the area of the oil sump. At the lower part of the unit and on the body of the rod, the following are present according to their operation: the hydraulic piston with an active surface or piston (35), the connection point of the hydraulic pump for the disassembling of the piston (15), which is also a non-return valve with an exhaust capacity. From this point, after introducing the hydraulic liquid and the sealing thereof at the lower area of the cylinder with the elastic seal rings (38, 14, 19), it pushes the piston (35) to the upper free area of the cylinder (33), and for this purpose during this procedure, the non-return/exhaust valve (16) of the free space (33) is held open, so that no obstacles are present against its proper operation-response of the piston. Thus according to the above mentioned for the ascending path of the piston and its accessories, the disassembling phase-work is performed.

Reversely, during the assembling/tightening, the hydraulic will be introduced in the upper area of the cylinder (33), where the piston has remained in this position from the previous work, via the inlet valve located at the opposite side of the body of the rod (16), held again in the cylinder against leakage with the same synthetic sealing rings (14, 38), and now keeping the non-return/exhaust valve of the other area open. The piston (35) is pushed downwards, pulling-entraining the central elongate hollow bar (17), with all the accessories, to a tightening position. Now for this tightening position, two kinds of locks are available for secure retention in the proper operation position of the unit. The tongue locks (29), which during the disassembling phase had been removed, will be inserted in their position, in the inner contact area with the ending of the nut of the hydraulic piston (36), which is screwed and constitutes the extension of the central elongate hollow bar (17), have the same frustoconical shape with that of the hydraulic piston (36), with incisions at the end for the use of a joining/dismantling tool. For the full introduction or position, and also to prevent any play as a result of wear during operation, these are secured additionally with the locks (28). These are locks (28) having an eccentric ring, their lower end also having a frustoconical shape, and similarly to the locks (29) they have a hole (41, 42) with thread for fitting an extractor, if there are problems during their extraction from their position, during operation. The locks (29) are provided in various sizes, for possible repair of pressures or compression gaps, and the locks (28) execute the tracing of the proper joint position and contacts or wear to which some of the other cooperating parts have been subjected and these may need replacement. Thus, it is possible to replace the piston head of an internal combustion engine, which presents damages more frequently than other parts, with the least possible damage risks, and by performing the work in a very small time period. Finally, the screws with the strip locks (25) fix the whole construction at its position.

Figure 2 exhibits in a partial cross-section the head and skirt of the piston, with the perpendicular vectors (A) and horizontal ones (B), which must be covered by the upper frustoconical area of the central elongate hollow rod (20), in relation to the engaged horse shoe locks (2) and extractors (1), in order to perform their operation.

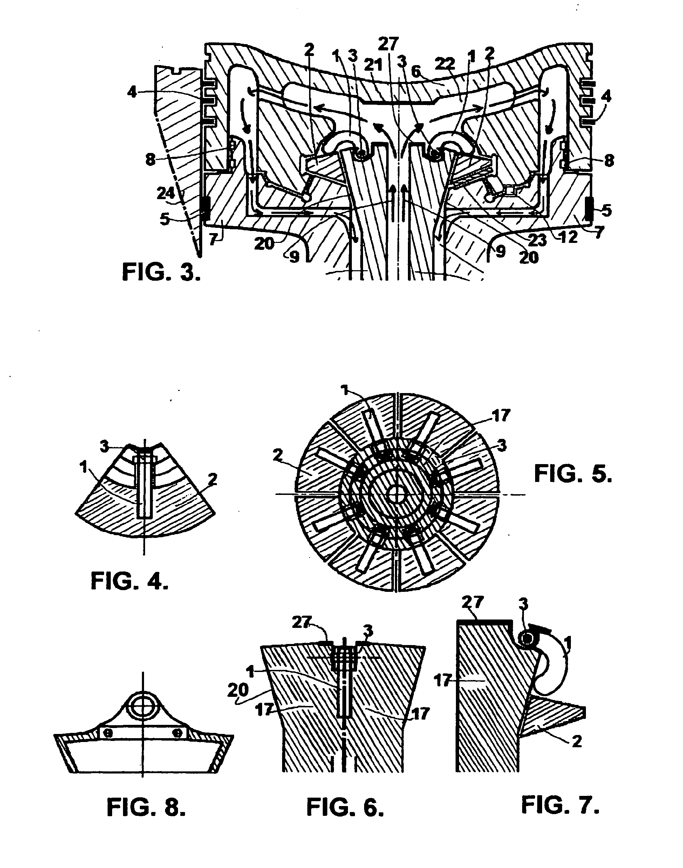

Figure 3 presents a local cross-section of the top of the piston, and is a partial repeat of those presented and in the elongate cross-section of figure 1, with the same terminology and numbering, for understanding those depicted in plan view below, in figure 5.

Figure 4 shows in plan view a horse shoe lock (2) with its extractor (1) and its pin (3) in tightening position.

Figure 5 depicts in plan view the upper part of the central elongate hollow bar (17), the extractors with their pins (1, 3), as well as the horse shoe locks (2) in tightening position.

Figure 6 depicts in cross-section the upper part of the central elongate hollow bar (17) with its frustoconical shape and in side view an extractor (1) with its pin (3) in hanging or disassembling position, as well as the upper reinforced end (27) of the central elongate hollow screw which acts as a final detacher of the head of the piston (6).

Figure 7 shows figure 6 in an 90° angle and shows a horse shoe lock (2) which has locked the head and has moved to the center and to the lower part of the frustoconical area of the central elongate hollow bar (20).

Figure 8 shows a grab tool consisting of two parts connected between them by screws, by which we can tie the central elongate hollow bar (17) from its upper part (20), after removal of the extractors (1) and remove it only when it is needed for extended maintenance work.

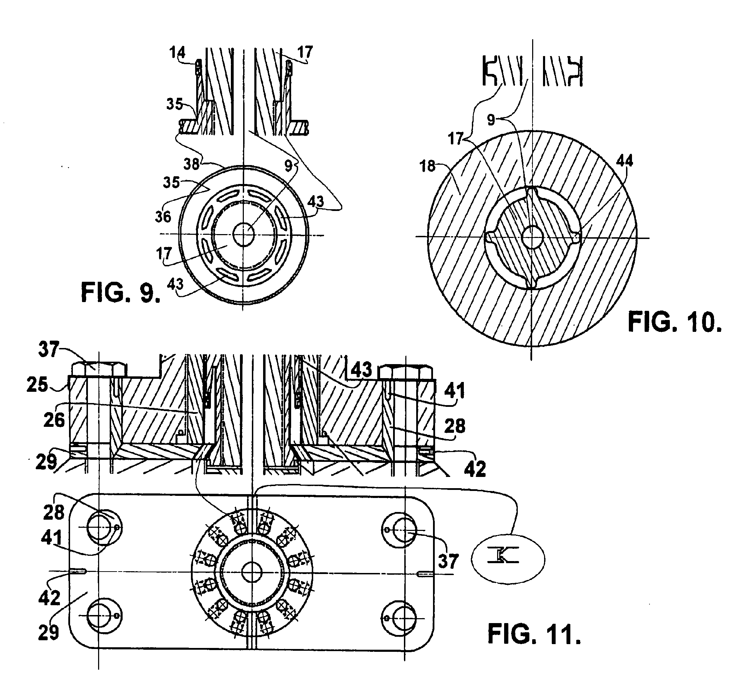

Figure 9 shows in plan view the double purpose of the hydraulic piston, to serve in the assembling/disassembling of the piston (35), to serve in cooling the piston, with the passage openings for the cooling liquid (43). The synthetic rings for sealing the active surface-periphery of the piston (38) are shown, as well as the central elongate hollow bar (17) on which the plunger is screwed.

Figure 10 shows in plan view the shape with cross-shaped extensions (44) of the rib, for reinforcing the central elongate hollow bar and especially against bending, during disassembling, for preserving the alignment. The openings are shown, respective to those on the body of the plunger, which serve in the flowing of the cooling liquids between the central elongate hollow bar (17) and the main rod (18), as well as the central pipe that transfers the cooling medium (9) from the center of the central elongate hollow bar (17).

Figure 11 shows in plan view the sole of the rod, with the positions and the view of the eccentric locks-tracers thereof, and depicts in plan view the tongue locks (29), with the positions and the view of the eccentric locks-tracers (28) thereof, and the holes present on the body of the tongue locks which at the upper front have a rounded face in order to avoid the vortex and to facilitate the passing of the cooling liquid. The dovetail ending on the face joining the two tongue locks is shown. The holes for positioning the extractors for the extraction of the tongue locks (42) and of the eccentric tracers-locks (41) are evident.

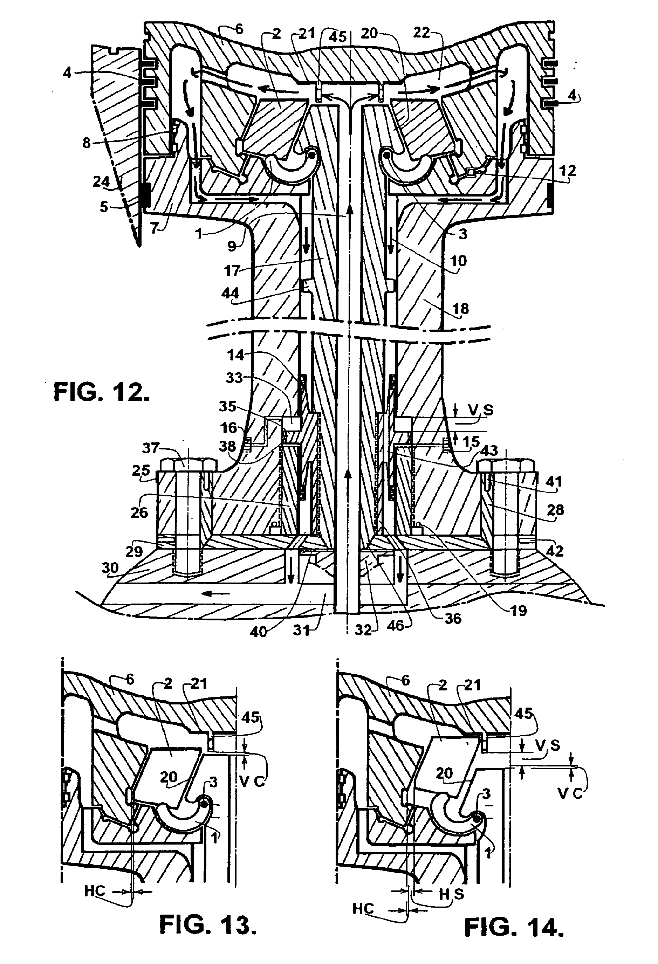

Figure 12 shows a side cross-section in lenghr of all the parts constituting the second case of the present invention. At a first glance, the procedure has been reversed, but the same components are present. Thus, the main part is again the central elongate hollow bar (17), which being now shifted upwards, due to the hydraulic pressure exerted on the lower surface of the hydraulic piston (35), which is again a permanent part of the rod, due to the reversed frustoconical surface (20), of the upper part of the central elongate hollow bar (17), entrains the extractors (1), which may turn to their pins (3), and thus the horse shoe locks (2) can fall in the created frustoconical cylindrical area, while at the same time the frustoconical surface (20) pushes them towards the periphery, and compressing these in and on special configured seat rings, where it is the final rest position at working condition. The central elongate hollow bar (17) has separated cross-shaped ribs (44), as it is better shown in figure 10, since it is the same construction, which between that and the main rod (18) leaves large openings for the cooling liquid, and at the same time it aids to avoid the bending of the bar, due to counter-support on the internal walls of the main rod (18) by the exerted compression during work and continuously during operation, thus avoiding the separation of the tightened parts from their mutual contact. Since the tilt angle of the frustoconical surface (20) is low, and the required path of the hydraulic piston, for assembling-disassembling, and the compression is also small, the frustoconical surface (20) of the central elongate hollow bar is not under stress, and helps in monitoring the right contacts. If we now want to dismantle the head for the remaining piston, and there is no serious reason for any other work-replacement, again we can execute the work without removing the piston from its cylinder. Thus after we provide hydraulic pressure from the connection (16), and at the same time we keep the exhaust valve (15) open at the opposite side of the cylinder (33), the central elongate hollow bar (17), which was now at the upper tightening position is drawn, this time it pushes the extractors (1) downwards rotating these to the periphery and as they are in constant contact with the horse shoe locks (2), it detaches them from their contact seats and starts to move them upwards, until the horizontal stroke (HS) and vertical stroke (VS) paths are executed, depicted in detail in figure 14. When these courses have been executed, the horseshoe locks will have been removed from the key positions and will have ascended to a height where they can tilt due to weight towards the center. For this purpose, there is a ring projection (45), which is at the lower-inner part of the top of the head (6), the ring in this case constitutes a single part with the remaining body, however it can also be a different part. This ring not only holds the horseshoe locks against turning, but it brings them in contact with the reinforced ring projection (21) where by contact the final detachment will occur and the head can be pulled and removed from its position. This ring projection (45) has peripherally enough holes, which allow the cooling liquid of the head to flow through. Of course, before initiating this procedure, the screws of the sole of the rod (37), the eccentric safety traces (28) and the tongue locks (29) have been removed from their position. Of course, for the tightening, after reversal of the procedures, all the locks will be placed again in place. The lower end of the central elongate hollow bar (46) has a reversed cone direction this time, so that it holds in continuous compression this and all its accessories, for permanent contact. This is again aided by the tongue locks (29) which also have a reversed tilting. The tongue locks are secured in turn with the suitable cone configuration of the eccentric cylindrical traces (28) and all these are double-secured by the screws (37) and the strip locks (25) thereof. From this point (32) by a strip insert (40) the cooling liquid is introduced through the cavity of the bar (17) and advances to the head. After passing through the spaces (22), it will return from the ring space formed between the bar and the interior of the main jacket (10), and will continue to the openings and passages created between cross-shaped reinforcements (44) and the corresponding ones of the plunger (43) and finally it will pass through the other openings of the tongue locks (29). The required path which must be executed by the hydraulic piston (35) for any purpose is the (V S), however in order to prevent any wear, normal or not, in time, this should be somewhat larger. Also in this figure it is shown: (14) synthetic flexible seals of upper and lower end portions of the skirt of the hydraulic piston, (35) all the other synthetic seals in the active area of the hydraulic piston. (19) is the synthetic seal against any losses of hydraulic oils, from the screw area of the ring mantle (26), on the main rod (18). (30) shows part of the pin of the crosshead or cross of the system. Finally also in this device, a small wedge angle is shown which has a frustoconical upper configured area (20), of the central elongate hollow bar (17), for reducing the break compressions.

Figure 13 shows in partial side view, the portion of the head-skirt of the piston, in assembly position and ready to operate. The intervals (HC) and (VC) are horizontal and perpendicular gaps between head and horseshoe locks and between the top of the central elongate hollow bar (17) and the ring guide (45), the latter bringing the horseshoe locks into the reinforced portion of the head (21) for the final detachment.

Figure 14 shows in side partial cross section, the head with the remaining parts constituting the piston, when the horseshoe locks (2) have been removed from the tightening seats of the head (6), and these being pushed by the central elongate hollow bar (17), due to the action of the hydraulic pressure of the incorporated hydraulic cylinder, have covered the distance (VS) Vertical Stroke, and are before the final detachment phase. For this, a minimum ascending path is further required. The head is thus detached. The number of horseshoe locks and the respective extractors depends on the load they will encounter - size of machine. The mechanism of the hydraulic piston could also be positioned at the top of the main rod. However, since the synthetic seals have a maximum safe resistance temperature or a maximum temperature at which the elasticity is preserved, and since the temperatures of the surrounding metals significantly exceed that of their resistance, what would happen in case of non-deliberate interruption of cooling? Or crack at the top of the head? The results would be deleterious. Only if the skirt with the body of the main rod constituted two separate pieces, connected between them with screws, then we could have an access for local dismantling. In the case of the present devices, the position of the pistons is not near to such high temperature areas. In case that, due to metal fatigue, the central elongate hollow bar is broken, due to tension or compression, the piston is not rejected, but can be entirely removed from its position, the hydraulic piston can be disassembled and the damaged parts can be removed.

It should be noted that the description of the invention was made with reference to an indicative, non-limiting embodiment. Thus, any change or modification as regards shapes, sizes, dimensions, the construction and assembly materials and components employed, as long as within the scope of the appended claims should be considered as contained in the scope of the present invention.

## Claims

1. A piston assembly presenting a skirt (7), a rod (18) and a piston head (6), which can be rapidly assembled/disassembled by a hydraulic key (35) installed within the rod (18), **characterized by** the fact that inside the rod (18) a central elongate hollow bar (17) retains the head (6) and the skirt (7) of the piston and carries via the frustoconical and wedge-shaped surfaces, the motion created because of the exerted hydraulic pressure to the horse shoe locks (2) for their movement via guides; it also employs extractors (1) that are dragged down by the movement of the locks (2) and tighten the piston (6) while inside the elongate hollow bar (17) there is a passage (9) for the cooling liquid of the piston head (6) and skirt (7).

2. A piston assembly which can be rapidly assembled/disassembled by a hydraulic key installed within the rod, according to claim 1, **characterized by** the fact that the skirt (7) of the piston (6) carries a ring guide (5) made of a material softer than the jacket (24) with the view of preserving the alignment of the piston (6) on its jacket (24).

3. A piston assembly which can be rapidly assembled/disassembled by a hydraulic key installed within the rod, according to claim 1, **characterized by** the fact that the inner lower part of the hydraulic key, the elastic seals are protected in order to retain their elasticity and thus their sealability, due to the area in which they operate, the predominant temperature being much lower than the resistance point of the elastic elements against plasticity.

## Patentansprüche

1. Eine Kolbenbaugruppe, die eine Schürze (7), eine Stange (18) und einen Kolbenkopf (6) aufweist, die schnell zusammengebaut/auseinandergenommen werden kann durch eine hydraulischen Taste (35), die in der Stange (18) installiert ist, **dadurch gekennzeichnet, dass** innerhalb der Stange (18) ein zentraler, verlängerter, hohler Stab (17) den Kopf (6) und die Schürze (7) des Kolbens hält, und über die kegelstumpfförmigen und keilförmigen Oberflächen die Bewegung trägt, die von dem hydraulischen Druck auf den Hufeisen-Schlössern (2) für deren Bewegung durch Führungen ausübt wird- und die Auszieher (1) verwendet, die durch der Bewegung der Hufeisen-Schlössern (2) gezogen werden und den Kolben (6) festziehen, und gleichzeitig innerhalb des zentralen verlängerten hohlen Stab (17) es gibt einen Durchgang (9) für Kühlmittel des Kolbenkopfs (6) und der Schürze (7).

2. Eine Kolbenbaugruppe, die schnell zusammengebaut/auseinandergenommen werden kann durch eine hydraulischen Taste, die innerhalb der Stange installiert ist, nach Anspruch 1, **dadurch gekennzeichnet, dass** die Schürze (7) des Kolbens (6) eine ringformige Führung (5) aufweist, die von einer Stoffe hergestellt ist, die weicher als die Hülle (24) ist, um das Ausrichten des Kolbens (6) auf die Hülle (24) zu bewahren.

3. Eine Kolbenbaugruppe, die schnell zusammengebaut/auseinandergenommen werden kann durch eine hydraulischen Taste, die innerhalb der Stange installiert ist, nach Anspruch 1, **dadurch gekennzeichnet, dass** der innere niedrigere Teil der hydraulischen Taste, die elastischen Dichtungen werden geschützt, um ihre Elastizität und folglich ihre Versiegelbarkeit zu halten, wegen des Bereichs, in dem sie arbeiten, wobei die vorherrschende Temperatur viel niedriger als der Widerstand-Punkt der elastischen Elemente gegen Plastizität ist.

## Revendications

1. Un ensemble de piston qui a une bordure (7), un tige (18) et une tête de piston (6), qui peut vite s'assembler/désassembler par un tenon hydraulique (35), par un tenon hydraulique (35), installé dans le tige (18), **caractérisé par le fait qu'** à l'intérieur du tige (18) se trouve une barre élongée creuse centrale (17) qui retient la tête (6) et la bordure (7) du piston et execute, à l'aide des surfaces de forme conique tronquée et clavettée, le mouvement creé par la pression hydraulique appliquée sur les pieces de verrouillage (2) en forme de fer à cheval, pour qu' elles bougent à l'aide des guides. Il utilise aussi des extracteurs (1) qui sont traînés vers le bas par le mouvement des pièces de verrouillages (2) et serrent le piston (6), tandis que à l'intérieur de la barre creuse élongée (17) il y a un passage (9) pour la liquide de refroidissement de la tête du piston (6) et de la bordure (7).

2. Un ensemble de piston qui peut vite s'assembler/désassembler par un tenon hydraulique installé à l'intérieur du tige, selon la revendication 1, **caractérisé par le fait que** la bordure (7) du piston (6) a un anneau de guidage (5) formé d' une matière plus souple que la "chemise" du cylindre (24), de façon à maintenir l' alignement du piston (6) sur la "chemise" du cylindre (24).

3. Un ensemble de piston qui peut vite s'assembler/désassembler par un tenon hydraulique installé à l'intérieur du tige, selon la revendication 1, **caractérisé par le fait qu'** à la partie basse intérieur du talon cylindrique les pièces elastiques d'étanchéité sont protégées de façon à ce qu' elles puissent préserver leur élasticité et ainsi leur étanchéité, due à l'étendue dans laquelle elles travaillent, la température prédominante étant très inférieure de celle du point de résistance des éléments élastiques contre la plasticité.
